# EUROPEAN PATENT SPECIFICATION

(11) **EP 3 399 863 B1**
(45) Date of publication and mention of the grant of the patent: **23.09.2020**
(21) Application number: 16781196.7
(22) Date of filing: 30.08.2016
(51) Int. Cl.: A23B 9/30, A23L 3/358, G01F 11/02, A23L 5/20

(54) **METHOD FOR THE REMOVAL OF MYCOTOXINS IN FOOD PRODUCTS**
VERFAHREN ZUR ENTFERNUNG VON MYKOTOXINEN IN LEBENSMITTELN
PROCÉDÉ D'ÉLIMINATION DES MYCOTOXINES DANS DES PRODUITS ALIMENTAIRES

(30) Priority: 08.09.2015 IT UB20153784
(43) Date of publication of application: 14.11.2018
(73) Proprietor: Almanova S.r.l., 41013 Castelfranco Emilia (Modena) (IT)
(72) Inventor: AMADEI, Ettore, 41013 Castelfranco Emilia (modena) (IT)
(74) Representative: Minghetti, Mauro
(86) International application number: PCT/IB2016/055165
(87) International publication number: WO 2017/042660

(56) References cited:
- WO-A1-99/57994
- AU-A1- 2013 236 231
- DE-A1- 19 805 795
- US-A- 3 890 452
- US-A1- 2012 009 280

## Description

### TECHNICAL FIELD OF THE INVENTION

The present invention concerns a method for the removal of mycotoxins in food products.

In particular the present invention concerns a method for the removal of mycotoxins in food products contaminated by them, which allows the treated products to be made suitable for eating again, for safe human or animal consumption, and at the same time allowing the nutritional value and the organoleptic characteristics to be kept unaltered.

### STATE OF THE ART

In the food and agriculture sector, a major problem is that of the contamination of food products by mycotoxins, i.e. toxic compounds produced by different types of fungi.

These, in particular environmental conditions of temperature and humidity, proliferate in particular on certain types of vegetable products, and also directly on plants, contaminating them with the mycotoxins that they generate.

Food products that can be contaminated by mycotoxins are cereals (corn, wheat, rice, barley, rye, and others besides), seeds and oilseeds (pumpkin seeds, hempseed, cottonseed, sunflower seed, peanuts, and others besides), legumes, shell fruit, dried and desiccated fruit, coffee, cocoa, spices, and others besides.

There are many types of mycotoxins, among which the most notoriously harmful are aflatoxins, fumonisins, ochratoxins, patulins, trichothecenes, zearalenone, and others besides.

Due to the risk that mycotoxins represent to human and animal health, their presence in food products cannot exceed thresholds strictly established by health standards.

Mycotoxins are very resistant and can remain even after the death of the fungi that produced them, thus remaining in contaminated foods and animal feed.

The contamination in man can take place directly, i.e. by direct consumption of contaminated foods, or even indirectly through the consumption of foods derived from animals fed with contaminated animal feed.

Mycotoxins are produced by fungi both on the plants before harvesting, and on the food products after harvesting itself, and even during the storage of the products in warehouses, silos, and similar.

As stated, in certain climatic conditions the proliferation of fungi and the consequent production of mycotoxins can be extremely high, to the point of contaminating a large part of the harvest of the food products already listed.

This results in clear problems both in terms of health, due to the risk that it represents to the health of those who consume it, and economically, due to the great loss of harvests.

Up to now, various methods have been devised to try to reduce the presence of mycotoxins in contaminated food products, without however achieving a satisfactory and safe decontamination.

Moreover, known methods are in some cases very expensive, and also result in a big alteration of the organoleptic characteristics and of the nutritional values of the food products thus treated, with all the obvious drawbacks deriving therefrom. Document AU 2013 236 231 A1 discloses a food sterilization and preservation method for eliminating a mycotoxin, said method comprising: a water vapor plasma irradiation step for irradiating water vapor plasma to a food that is contaminated with the mycotoxin; and a step for applying a powder of a calcined natural calcium material to the food that has been treated in the water vapor plasma irradiation step.

Document US 2012/009280 A1 discloses a method of reducing the rate of degradation of a biological material, in particular a method of producing an animal feed product from a wet biological material, includes the step of combining the biological material with a base comprising a metal oxide in an amount which is sufficient to heat the biological material to a temperature of above 50°C by reaction of water in the biological material with the metal oxide to produce the animal feed product.

Document WO 99/57994 A1 discloses a method for adsorbing toxic substances, especially mycotoxins, during the production of foodstuffs for human consumption or animal feed, preferably of types which are predominantly vegetable-based. The toxic substances are absorbed by using certain synthetic and/or natural zeolites or zeolite minerals as toxin absorbing agents.

Document DE 198 05 795 A1 discloses a natural mineral composition for the control of mycotoxicosis is based on natural montmorillonite and zeolite from sodium aluminium silicate and metal oxides and salts.

### PURPOSES OF THE INVENTION

The technical task of the present invention is therefore that of improving the state of the art.

In such a technical task, a purpose of the present invention is to devise a method for the removal of mycotoxins in food products that allows products contaminated by mycotoxins to be made edible again, so as to allow the safe human or animal consumption thereof.

Another purpose of the present invention is to devise a method for the removal of mycotoxins in food products that allows the nutritional value and the organoleptic characteristics of the treated products to be conserved.

A further purpose of the present invention is to devise a method for the removal of mycotoxins in food products that is simple, safe and cost-effective.

This task and this purpose are accomplished by the method for the removal of mycotoxins in food products, according to the attached claim 1.

The method for the removal of mycotoxins in food products comprises the steps of providing at least a quantity of at least one food product and at least a quantity of calcium oxide, such a food product having a predetermined humidity value suitable for treatment by direct contact with calcium oxide supplied in powder and/or microgranules; mixing at least such a quantity of at least one food product with the quoted at least a quantity of calcium oxide in respective predetermined percentages, so as to determine the contact between the surface of the food products with the calcium oxide for the removal of mycotoxins; cleaning the surface of the food products from calcium oxide, to make the treated products suitably edible again, characterised in that said step of mixing said quantity of food products with said quantity of calcium oxide takes place dry, without the addition of water and/or steam, and at room temperature, wherein said calcium oxide does not undergo transformations during said step of mixing said quantity of food products with said quantity of calcium oxide.

Further advantageous characteristics are described in the dependent claims.

### EMBODIMENTS OF THE INVENTION.

The method for the removal of mycotoxins in food products comprises the steps of providing at least a quantity of at least one food product and at least a quantity of calcium oxide, such a food product having a predetermined humidity value suitable for treatment by direct contact with calcium oxide supplied in powder and/or microgranules; mixing at least such a quantity of at least one food product with the quoted at least a quantity of calcium oxide in respective predetermined percentages, so as to determine the contact between the surface of the food products with the calcium oxide for the removal of mycotoxins; cleaning the surface of the food products from calcium oxide, to make the treated products suitably edible again, characterised in that said step of mixing said quantity of food products with said quantity of calcium oxide takes place dry, without the addition of water and/or steam, and at room temperature, wherein said calcium oxide does not undergo transformations during said step of mixing said quantity of food products with said quantity of calcium oxide.

The quoted calcium oxide has chemical formula CaO, is also known as quicklime, or anhydrous lime, and has essentially basic characteristics.

The food products to be treated can be suitable both for human and animal consumption.

In particular, such food products can be cereals (corn, wheat, rice, barley, rye, and others besides), seeds and oilseeds (pumpkin seeds, hempseed, cottonseed, sunflower seed, peanuts, and others besides), legumes, shell fruit, dried and desiccated fruit, coffee, cocoa, spices, and others besides, which can be contaminated by mycotoxins in warehouses, silos, and similar, where they are stored, or even directly on plants.

Mycotoxins, the cause of contamination of the aforementioned products, comprise in particular aflatoxins, fumonisins, ochratoxins, patulins, trichothecenes, zearalenone, and others besides.

The step of mixing the quantity of food products with the quantity of calcium oxide takes place dry, without the addition of water and/or steam. It is important to emphasise how the calcium oxide, during mixing with the food products having as stated predetermined residual humidity, does not undergo any transformation, always remaining anhydrous: in particular during the treatment of the food products the calcium oxide CaO does not hydrate, i.e. it does not transform into calcium hydroxide, having chemical formula Ca(OH)₂, also known as slaked lime or hydrated lime.

This, as will become clearer hereinafter, allows the recovery and reuse of the calcium oxide for subsequent treatments, and in particular allows the effective decontamination by direct contact of calcium oxide with the food products, without the organoleptic characteristics and the nutritional value thereof being altered. Moreover, the mixing of the food products with the calcium oxide takes place at room temperature, without rises in temperature of any origin, for example caused by exothermal chemical reactions or from any external heat source.

Indeed, as well known, even relatively slightly raised temperatures cause a negative alteration of the nutritional and organoleptic characteristics of the aforementioned food products: vitamins, amino acids and proteins already deteriorate at over just 40°C.

Therefore, any rise in temperature caused for example by an external heat source or even by a chemical reaction compromises the characteristics of the food products.

As known, in the presence of water, steam or high humidity, calcium oxide CaO transforms into calcium hydroxide Ca(OH)₂ (i.e. quicklime becomes slaked lime) according to the exothermal reaction with high release of heat: CaO + H2O = Ca(OH)2 + 1136 Kj/Kg of CaO.

If during the treatment of the food products such a reaction were to take place, the consequent rise in temperature would inevitably cause the alteration of the organoleptic characteristics and of the nutritional value of the products themselves. For this reason, the mixing of the food products having predetermined residual humidity with the calcium oxide must take place dry (without addition of water or steam) and at room temperature (without rises in temperature of any origin).

It is thus important to emphasise that the calcium oxide must not transform into calcium hydroxide, i.e. there must be no chemical hydration reaction, as occurs on the other hand in known treatments.

Normally, the food products are stored after having undergone a first drying adapted for reducing the humidity thereof to a value suitable for storage. However, it may be that in products stored in warehouses, silos, and the like, due to the unfavourable climatic conditions, the humidity value rises greatly: this promotes the proliferation of fungi on the products, with a consequent high contamination thereof due to the mycotoxins developed. Moreover, the product, in order to be effectively decontaminated, must have a predetermined humidity suitable for treatment with the aforementioned calcium oxide.

Therefore, in the case in which the products have a high humidity, the quoted step of providing the quantity of food products comprises a step of drying the products, so as to bring the humidity thereof to a predetermined value suitable for mixing with calcium oxide.

Preferably, the residual humidity value of the food products to be mixed with calcium oxide must be less than or equal to 13-14%.

Preferably, the calcium oxide is supplied in powder.

Or the calcium oxide is supplied in microgranules, obtained through calibrated grinding of blocks of such material.

In the case in which the food products are of the shell fruit type, the step of supplying the quoted quantity of food products comprises a prior shelling step of such shelled products.

The step of mixing the quantity of food products with the quantity of calcium oxide takes place for a predetermined time based on the contamination detected in the products and/or on the quantity of products to be treated and of calcium oxide used. The greater the contamination detected in the food products, the longer the time for which they will be mixed with calcium oxide.

In greater detail, the step of mixing the quantity of food products with the quantity of calcium oxide takes place for a predetermined time preferably shorter than or equal to 30 minutes. This does not rule out the possibility of the products being mixed with calcium oxide for a longer time, for example in the case in which the calcium oxide is supplied in microgranules, or due to a very high detected contamination, and other contingent conditions.

In particular, the step of mixing the quantity of food products with the quantity of calcium oxide takes place in predetermined percentages respectively comprised between 50% and 99.5% of the total for the food products and comprised between 0.5% and 50% of the total for calcium oxide.

The percentages can however be different (greater or lower than those indicated) as a function of the detected contamination, in the case in which the calcium oxide is supplied in microgranules, and other contingent conditions.

Preferably, the percentage of the quantity of food products is equal to 90% of the total, and the percentage of the quantity of calcium oxide is equal to 10% of the total.

As stated, this does not rule out the possibility that of percentages still being higher or lower than those indicated.

The step of mixing the food products with the calcium oxide is carried out through a mixing machine adapted for continuous mixing thereof.

Such a machine adapted for continuous mixing is preferably selected from a rotary drum mixer, an Archimedean screw mixer, an arm mixer, a vibrating sieve mixer, and similar.

It is important that the mixing is continuous for the entire time foreseen, so that the surface of the food products makes good and even contact with the calcium oxide.

The decontamination of the food products, indeed, takes place by direct contact of the outer surface of the products themselves with calcium oxide that, due to its basic characteristics, creates a hostile environment for mycotoxins, allowing them to be removed effectively.

The quoted step of cleaning the surface of the food products from calcium oxide is carried out through sieving, and/or shaking, and/or brushing, and/or forced ventilation, and similar, of the food products.

In particular, the step of mixing the products with calcium oxide and the step of cleaning the products from calcium oxide can be carried out by one same machine, suitably structured to carry out both of the steps.

For example, a vibrating sieve type mixer can foresee means for recovering calcium oxide actuated at the user's discretion once the step of mixing the products with calcium oxide has ended.

The method also comprises a step of recovering the calcium oxide removed from the food products, for the subsequent reuse thereof.

In fact, the calcium oxide removed from the surface of the food products can be easily recovered, for example again through the machine that carries out the cleaning of the products. The recovered calcium oxide can be reused for the treatment of subsequent quantities of food products, until the possible hydration thereof occurs due to the accumulated humidity due to the repeated contacts with the products to be treated. The hydrated lime, or calcium hydroxide, or slaked lime, having chemical formula Ca(OH)₂ as seen is not indeed suitable for the removal of mycotoxins in food products, since it alters the organoleptic and nutritional characteristics thereof.

The food products that, even after the step of cleaning the outer surface thereof, still have a small residual quantity of calcium oxide, do not in any case represent a risk to the health of the consumer, remaining safe to eat.

Moreover, such residue prevents the possible proliferation of fungi, and the consequent production of mycotoxins, in the case in which the products are put back waiting to be used.

In all cases, to easily and effectively remove the possible calcium oxide residue from the treated products, it is sufficient to wash them with water before consumption. In this way, any residual trace of calcium oxide is eliminated.

The invention, thus conceived, allows important technical advantages to be obtained.

An important technical advantage consists of the fact that the method for the removal of mycotoxins in food products allows products contaminated by mycotoxins to be made suitable for eating again, allowing the safe human or animal consumption thereof.

In fact, the removal of mycotoxins is obtained as seen through the direct contact of the outer surface of the contaminated food products with calcium oxide for a predetermined time based on the detected toxicity, and on the quantity of product to be treated.

Calcium oxide, thanks to its essentially basic chemical characteristics, allows effective removal of mycotoxins, making the treated products optimal for eating again.

The described method also allows the recovery of large quantities of food products, as well as entire harvests, which when stored in a warehouse, due for example to the climatic conditions favourable to the proliferation of fungi, have been contaminated by mycotoxins: a dual advantage is thus obtained in terms of health for the safe consumption of the products without risks to the health of consumers, and in economic terms due to the recovery of harvests that would otherwise have been lost.

The described method comprises steps that do not in any way alter the organoleptic characteristics and the nutritional value of the treated products, keeping them unaltered unlike what happens with known methods.

Moreover, the method for the removal of mycotoxins in food products can as seen be carried out in a simple, safe and cost-effective manner.

It has thus been seen how the invention achieves the proposed purposes.

## Claims

1. Method for the removal of mycotoxins in food products, comprising the steps of providing at least a quantity of at least one food product and at least a quantity of calcium oxide, said food product having a predetermined humidity value suitable for treatment by direct contact with said calcium oxide supplied in powder and/or microgranules; mixing at least said quantity of at least one food product with said at least a quantity of calcium oxide in respective predetermined percentages, so as to determine the contact between the surface of the food products with said calcium oxide for the removal of mycotoxins; cleaning the surface of the food products from said calcium oxide, to make the treated products suitably edible again, **characterised in that** said step of mixing said quantity of food products with said quantity of calcium oxide takes place dry, without the addition of water and/or steam, and at room temperature, wherein said calcium oxide does not undergo transformations during said step of mixing said quantity of food products with said quantity of calcium oxide.

2. Method, according to claim 1, wherein said step of providing said quantity of food products comprises a step of drying the products, so as to bring the humidity thereof to a predetermined value suitable for mixing with said calcium oxide.

3. Method, according to any one of the previous claims, wherein the residual humidity value of the food products to be mixed with calcium oxide is less than or equal to 14%.

4. Method, according to any one of the previous claims, wherein said step of providing said quantity of food products comprises a shelling step of shell-type products.

5. Method, according to any one of the previous claims, wherein said step of mixing said quantity of food products with said quantity of calcium oxide takes place for a predetermined time based on the contamination detected in the products and/or on said quantity of products to be treated and of calcium oxide used.

6. Method according to any one of the previous claims, comprising said step of mixing said quantity of food products with said quantity of calcium oxide in predetermined percentages respectively comprised between 50% and 99.5% of the total for the food products and comprised between 0.5% and 50% of the total for said calcium oxide.

7. Method, according to any one of the previous claims, wherein said step of mixing said quantity of food products with said quantity of calcium oxide is carried out through a mixing machine adapted for continuously mixing the food products with said calcium oxide.

8. Method, according to claim 7, wherein said machine adapted for continuous mixing is selected from a rotary drum mixer, an Archimedean screw mixer, an arm mixer, a vibrating sieve mixer.

9. Method, according to any one of the previous claims, wherein said step of cleaning the surface of the food products from said calcium oxide is carried out through sieving, and/or shaking, and/or brushing, and/or forced ventilation, of the food products.

10. Method, according to any one of the previous claims, comprising a step of recovering the calcium oxide removed from the food products, for the subsequent reuse thereof.

11. Method, according to any one of the previous claims, wherein said calcium oxide has chemical formula CaO.

## Patentansprüche

1. Verfahren zur Entfernung von Mykotoxinen in Lebensmittelprodukten, umfassend die Schritte des Bereitstellens mindestens einer Menge mindestens eines Lebensmittelprodukts und mindestens einer Menge von Calciumoxid, wobei das besagte Lebensmittelprodukt einen vorbestimmten Feuchtigkeitswert aufweist, der zur Behandlung durch direkten Kontakt mit dem als Pulver und/oder Mikrogranulat zugeführten Calciumoxid geeignet ist; des Mischens mindestens der besagten Menge eines Lebensmittelprodukts mit der besagten mindestens einen Menge von Calciumoxid in jeweiligen vorbestimmten Prozentsätzen, um den Kontakt zwischen der Oberfläche der Lebensmittelprodukte mit dem besagten Calciumoxid zur Entfernung von Mykotoxinen zu bestimmen; des Reinigens der Oberfläche der Lebensmittelprodukte von dem Calciumoxid, um die behandelten Produkte in geeigneter Weise wieder essbar zu machen, **dadurch gekennzeichnet, dass** der besagte Schritt des Mischens der besagten Menge von Lebensmittelprodukten mit der besagten Menge von Calciumoxid trocken, ohne die Zugabe von Wasser und/oder Dampf und bei Raumtemperatur, bei der das besagte Calciumoxid während des besagten Schritts des Mischens der besagten Menge von Lebensmittelprodukten mit der besagten Menge von Calciumoxid keinen Umwandlungen unterliegt, stattfindet.

2. Verfahren nach Anspruch 1, worin der besagte Schritt des Bereitstellens der besagten Menge von Lebensmittelprodukten einen Schritt des Trocknens der Produkte umfasst, um deren Feuchtigkeit auf einen vorbestimmten Wert zu bringen, der zum Mischen mit dem besagten Calciumoxid geeignet ist.

3. Verfahren nach irgendeinem der vorangegangenen Ansprüche, worin der Restfeuchtigkeitswert der mit Calciumoxid zu mischenden Lebensmittel kleiner als oder gleich 14 % ist.

4. Verfahren nach irgendeinem der vorangegangenen Ansprüche, worin der besagte Schritt des Bereitstellens der besagten Menge von Lebensmittelprodukten einen Schälschritt schalenartiger Produkte umfasst.

5. Verfahren nach irgendeinem der vorangegangenen Ansprüche, worin der besagte Schritt des Mischens der besagten Menge von Lebensmittelprodukten mit der besagten Menge von Calciumoxid für eine vorbestimmte Zeit auf der Basis der in den Produkten festgestellten Kontamination und/oder der besagten Menge von zu behandelnden Produkten und von verwendetem Calciumoxid stattfindet.

6. Verfahren nach irgendeinem der vorangegangenen Ansprüche, umfassend den besagten Schritt des Mischens der besagten Menge von Lebensmittelprodukten mit der besagten Menge von Calciumoxid in vorbestimmten Prozentsätzen, die jeweils zwischen 50 % und 99,5 % der Gesamtmenge für die Lebensmittelprodukte und zwischen 0,5 % und 50 % der Gesamtmenge für das besagte Calciumoxid liegen.

7. Verfahren nach irgendeinem der vorangegangenen Ansprüche, worin der besagte Schritt des Mischens der besagten Menge von Lebensmittelprodukten mit der besagten Menge von Calciumoxid durch eine Mischmaschine ausgeführt wird, die zum kontinuierlichen Mischen der Lebensmittelprodukte mit dem besagten Calciumoxid ausgelegt ist.

8. Verfahren nach Anspruch 7, worin die besagte zum kontinuierlichen Mischen ausgelegte Maschine ausgewählt ist aus einem Drehtrommelmischer, einem archimedischen Schneckenmischer, einem Armmischer, einem Vibrationssiebmischer.

9. Verfahren nach irgendeinem der vorangegangenen Ansprüche, worin der besagte Schritt des Reinigens der Oberfläche der Lebensmittelprodukte von dem besagten Calciumoxid durch Sieben und/oder Schütteln und/oder Bürsten und/oder Zwangsbelüftung der Lebensmittel ausgeführt wird.

10. Verfahren nach irgendeinem der vorangegangenen Ansprüche, umfassend den Schritt der Rückgewinnung des aus den Lebensmittelprodukten entfernten Calciumoxids für die spätere Wiederverwendung desselben.

11. Verfahren nach irgendeinem der vorangegangenen Ansprüche, worin das besagte Calciumoxid die chemische Formel CaO hat.

## Revendications

1. Procédé pour l'élimination de mycotoxines dans les produits alimentaires, comprenant les étapes de fourniture d'au moins une quantité d'au moins un produit alimentaire et d'au moins une quantité d'oxyde de calcium, ledit produit alimentaire ayant une valeur d'humidité prédéterminée adaptée au traitement par contact direct avec ledit oxyde de calcium fourni en poudre et/ou microgranules ; mélange d'au moins ladite quantité d'au moins un produit alimentaire avec ladite au moins une quantité d'oxyde de calcium en pourcentages prédéterminés respectifs, afin de déterminer le contact entre la surface des produits alimentaires avec ledit oxyde de calcium pour l'élimination des mycotoxines ; nettoyage de la surface des produits alimentaires dudit oxyde de calcium, pour rendre les produits traités de nouveau consommables, **caractérisé en ce que** ladite étape de mélange de ladite quantité de produits alimentaires avec ladite quantité d'oxyde de calcium a lieu à sec, sans l'ajout d'eau et/ou de vapeur, et à température ambiante, dans lequel ledit oxyde de calcium ne subit pas de transformations pendant ladite étape de mélange de ladite quantité de produits alimentaires avec ladite quantité d'oxyde de calcium.

2. Procédé, selon la revendication 1, dans lequel ladite étape de fourniture de ladite quantité de produits alimentaires comprend une étape de séchage des produits, afin d'amener son humidité à une valeur prédéterminée adaptée au mélange avec ledit oxyde de calcium.

3. Procédé, selon l'une quelconque des revendications précédentes, dans lequel la valeur d'humidité résiduelle des produits alimentaires à mélanger avec l'oxyde de calcium est inférieure ou égale à 14%.

4. Procédé, selon l'une quelconque des revendications précédentes, dans lequel ladite étape de fourniture de ladite quantité de produits alimentaires comprend une étape de décorticage des produits à coque.

5. Procédé, selon l'une quelconque des revendications précédentes, dans lequel ladite étape de mélange de ladite quantité de produits alimentaires avec ladite quantité d'oxyde de calcium a lieu pour une durée prédéterminée basée sur la contamination détectée dans les produits et/ou sur ladite quantité de produits à traiter et d'oxyde de calcium utilisé.

6. Procédé selon l'une quelconque des revendications précédentes, comprenant ladite étape de mélange de ladite quantité de produits alimentaires avec ladite quantité d'oxyde de calcium en pourcentages prédéterminés respectivement compris entre 50% et 99,5% du total pour les produits alimentaires et compris entre 0,5% et 50% du total pour ledit oxyde de calcium.

7. Procédé, selon l'une quelconque des revendications précédentes, dans lequel ladite étape de mélange de ladite quantité de produits alimentaires avec ladite quantité d'oxyde de calcium est réalisée avec un mélangeur adapté pour mélanger en continu les produits alimentaires avec ledit oxyde de calcium.

8. Procédé, selon la revendication 7, dans lequel ladite machine adaptée pour le mélange continu est sélectionnée parmi un mélangeur à tambour rotatif, un mélangeur à vis d'Archimède, un mélangeur à bras, un mélangeur à tamis vibrant.

9. Procédé, selon l'une quelconque des revendications précédentes, dans lequel ladite étape de nettoyage de la surface des produits alimentaires dudit oxyde de calcium est réalisée par tamisage, et/ou agitation, et/ou brossage, et/ou ventilation forcée, des produits alimentaires.

10. Procédé, selon l'une quelconque des revendications précédentes, comprenant une étape de récupération de l'oxyde de calcium éliminé des produits alimentaires, pour sa réutilisation successive.

11. Procédé, selon l'une quelconque des revendications précédentes, dans lequel ledit oxyde de calcium a la formule chimique CaO.
